# EUROPEAN PATENT SPECIFICATION

(11) **EP 4 132 676 B1**
(45) Date of publication and mention of the grant of the patent: **16.07.2025**
(21) Application number: 21784475.2
(22) Date of filing: 26.01.2021
(51) Int. Cl.: B01D 33/72, D21C 9/06, D21D 1/40, D21F 1/74, B01D 33/073

(54) **A PULP DISTRIBUTION COMPARTMENT ARRANGEMENT, A PULP FILTER EQUIPMENT AND A PULP INTRODUCTION METHOD**
ANORDNUNG EINER ZELLSTOFFVERTEILUNGSKAMMER, ZELLSTOFFFILTERGERÄT UND ZELLSTOFFEINBRINGUNGSVERFAHREN
AGENCEMENT DE COMPARTIMENT DE DISTRIBUTION DE PÂTE, ÉQUIPEMENT DE FILTRATION DE PÂTE ET PROCÉDÉ D'INTRODUCTION DE PÂTE À PAPIER

(30) Priority: 08.04.2020 SE 2050401
(43) Date of publication of application: 15.02.2023
(73) Proprietor: VALMET AB, 851 94 Sundsvall (SE)
(72) Inventor: VIKSTRÖM, Tomas, 854 60 Sundsvall (SE)
(74) Representative: Novagraaf Group
(86) International application number: PCT/SE2021/050045
(87) International publication number: WO 2021/206601

(56) References cited:
- WO-A1-2009/063135
- WO-A1-2009/131527
- WO-A1-2014/109693
- WO-A1-88/05840
- GB-A- 894 205
- US-A1- 2002 124 977
- US-A1- 2019 264 387
- US-B1- 6 461 479
- US-B1- 6 461 479
- US-B2- 9 598 818

## Description

### TECHNICAL FIELD

The present technology refers in general to arrangements and methods in pulp production and in particular to arrangements and methods in connection with pulp filter equipment utilizing cylinder-based dewatering.

### BACKGROUND

In different stages of a pulp production process, the pulp has to be washed and/or dewatered. A very common approach for achieving dewatering is to use pulp filter equipment utilizing cylinder-based dewatering. This approach is based on the action of a perforated rotating cylinder surface, onto which a pulp to be dewatered/washed is provided. Liquid components of the pulp may pass the perforations of the cylinder surface, leaving a pulp with a higher concentration at the surface. This process becomes particular efficient if a pressure difference is applied between the volume outside and inside the cylinder surface.

In order to make the production more efficient, the cylinders may be long. Lengths of 5-10 meters are not uncommon. The equipment for pressurizing and the rotation control of the cylinders may essentially the same as for shorter cylinders, however, the throughput of pulp is increased considerably.

One problem with the use of long cylinders for pulp filtering purposes is that the efficiency of the dewatering /washing depends on the pressure distribution along the cylinder surface. Gases and liquids experiencing a pressure difference tend to select a path having as small flow resistance as possible. If the distribution of pulp over the surface of the cylinder is uneven, gases and liquids will tend to penetrate or escape the pulp predominantly at places where the pulp has a low consistency, i.e. where the pulp concentration is low. This means that an uneven distribution of pulp over the cylinder surface may give rise to unevenly dewatered/washed pulp.

The pulp is typically provided to the dewatering/washing arrangements by different types of pipe systems. When the pulp reaches the cylinders, the pulp has typically to be distributed over a much wider cylinder surface. Different arrangements of distributer screws have been used. The distribution action such screws is typically in the same order of magnitude as the speed of the rim of the screw. Since the speed of the screw typically in many applications is selected to be approximately the same as the pulp flow speed, the result of the distributer screw is typically limited, leading to that the pulp distribution still is very uneven. Furthermore, changes in pulp conditions, such as temperature, concentration, inlet flow speed etc. may influence the optimum screw speed. However, distributer screws are typically low-complexity arrangements having small or no possibilities to change the rotational speed.

US6461479B1 discloses a process for distributing an especially medium-consistent fibrous suspension in front of a dewatering device. It is distinguished in that the fibrous suspension is taken to the dewatering device in fluidized form and evenly distributed. Also disclosed is a device for implementing the process in which there is a closed device with a fluidizing rotor in front of the dewatering device.

US9598818B2 discloses an apparatus for washing and/or dewatering cellulose pulp including a movable permeable surface in a pulp transportation chamber having a chamber gap above the movable permeable surface, a pulp distributor for distributing pulp onto the movable permeable surface, a throttle having a throttle gap width and an adjustable throttle adjuster to remotely adjust the throttle gap width so that a volume of pulp flow into the pulp distributor is equal to or greater than the volume of pulp flow out of the distributor during operation.

US2019264387A1 discloses a method for processing pulp in an apparatus for washing and dewatering pulp, and a system for controlling this apparatus, the apparatus comprising two rotatable press rolls having a permeable outer surface, and a vat, the press rolls defining a press nip between them. The processing is determined by a set of variable operating parameters, which are adjusted and/or maintained during operation in response to deviations of measured values of control parameters in relation to their respective predetermined threshold values. The variable operating parameters include rotation speed of the press rolls. The control parameters include vat pressure and/or linear load.

Furthermore, US2002124977A1 discloses a distributor device for cellulose pulp of low and medium consistency that is used to form a uniform pulp web running from the distributor device in an apparatus treating the cellulose pulp. The distributor device has a cylindrical distributor housing arranged horizontally and transverse to the pulp web, and an inlet for the cellulose pulp at one end of the distributor housing and on the pulp web side. Pulp is fed with feed screws from the inlet and along the length of the distributor housing. The web is initially formed via the outlets defined along a generatrix in the jacket surface of the distributor housing. An optimum distribution of low-concentration pulp is obtained with the holes arranged along the generatrix in the jacket surface of the distributor housing. The holes have a defined hole diameter and are arranged at a distance from each other. The interaction with the feed screw makes it possible to keep the holes free from clogging.

### SUMMARY

A general object to find additional arrangements for improving the homogeneity of the pulp treatment in dewatering/washing arrangements.

The above object is achieved by methods and devices according to the independent claims. Preferred embodiments are defined in dependent claims.

In general words, in a first aspect, a pulp distribution compartment arrangement for pulp filter equipment utilizing cylinder-based dewatering comprises a distribution compartment and a distributer screw. The distribution compartment has an exit opening. The exit opening has an elongated shape with a main extension in a first direction. An inlet to the distribution compartment is provided at a side of the distribution compartment opposite to the exit opening. The inlet enters the distribution compartment at an inlet position in the first direction. The distributer screw is rotatably arranged in the distribution compartment with a rotation axis parallel to the first direction. An elongated flow passage is defined between the distributer screw and a side wall of the distribution compartment. The side wall extends in a flow direction between the inlet and the exit opening. A throttle surface is provided at the side wall in a position along the first direction corresponding to the inlet position. The throttle surface provides a restriction of the elongated flow passage at the position in comparison to other positions in the first direction.

In a second aspect, a pulp filter equipment comprises a pulp dewatering arrangement having a pulp compartment provided in contact with a perforated cylinder. A pulp distribution compartment arrangement according to the first aspect is provided. The pulp distribution compartment arrangement is arranged with the exit opening in fluid contact with the pulp compartment and with the main extension of the exit opening being parallel to an axis of the cylinder.

In a third aspect, a pulp introduction method for pulp filter equipment utilizing cylinder-based dewatering comprises introducing a flow of pulp into a distribution compartment through an inlet. The pulp is passed the distribution compartment to an exit opening. The exit opening is situated at a side of the distribution compartment opposite to the inlet and has an elongated shape with a main extension in a first direction. The flow of pulp entering the distribution compartment at an inlet position in the first direction. A distributer screw rotatably arranged in the distribution compartment with a rotation axis parallel to the first direction is rotated. An elongated flow passage is defined between the distributer screw and a side wall of the distribution compartment. The side wall extends in a flow direction between the inlet and the exit opening. A throttle surface is provided at the side wall in a throttle position along the first direction corresponding to the inlet. The throttle surface provides a restriction of the elongated flow passage at the throttle position in comparison to other positions in the first direction.

One advantage with the proposed technology is that pulp is more evenly distributed over the width of a dewatering cylinder without requiring large amounts of additional supplied energy. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 illustrates an example of a pulp filter equipment utilizing cylinder-based dewatering;
FIG. 2A illustrates a part of an example of a pulp distribution compartment arrangement;
FIG. 2B illustrates the pulp distribution compartment arrangement if Fig. 2A in a cross-sectional view;
FIG. 2C illustrates the pulp distribution compartment arrangement if Fig. 2A in another cross-sectional view;
FIG. 3A illustrates schematically an embodiment of a pulp distribution compartment arrangement with a throttle surface;
FIG. 3B illustrates the pulp distribution compartment arrangement of Fig. 3A in a cross-sectional view;
FIGS 4A-D illustrate different shapes of throttle surfaces in a vertical direction;
FIGS 5A-B illustrate different shapes of throttle surfaces in a horizontal view;
FIGS 6A-B illustrate diagrams of the distribution of the protrusion of throttle surfaces along a direction parallel to a distributer screw;
FIG 7 illustrates an embodiment of a pulp distribution compartment arrangement with a control unit for a throttle surface;
FIGS 8A-B illustrates an embodiment of an adjustable throttle surface in different positions;
FIGS 9A-B illustrates another embodiment of an adjustable throttle surface in different positions;
FIG. 10 illustrates schematically an embodiment of a pulp distribution compartment arrangement having an asymmetrically positioned inlet;
FIG. 11 illustrates schematically an embodiment of a pulp distribution compartment arrangement having three inlets;
FIG. 12 illustrates an embodiment of a shape of a distribution compartment of a pulp distribution compartment arrangement; and
FIG. 13 illustrates a flow diagram of steps of an embodiment of a pulp introduction method for pulp filter equipment utilizing cylinder-based dewatering.

### DETAILED DESCRIPTION

Throughout the drawings, the same reference numbers are used for similar or corresponding elements.

For a better understanding of the proposed technology, it may be useful to begin with a brief overview of typical pulp filter equipment utilizing cylinder-based dewatering.

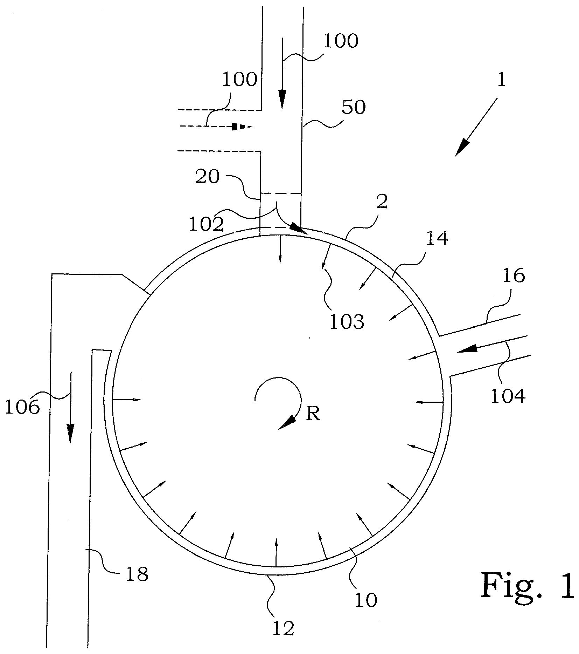

Figure 1 illustrates schematically parts of an embodiment of a prior art pulp filter equipment 1. The pulp filter equipment 1 comprises a pulp dewatering arrangement 2 having a perforated cylinder 10 enclosed by a housing 12. A pulp compartment 14 is defined between the perforated cylinder 10 and the housing 12.

Incoming pulp 100 is provided, typically by an inlet pipe 50 to a pulp distribution compartment arrangement 20, in which the pulp is distributed along the perforated cylinder 10 in the axial direction of the perforated cylinder 10. The incoming pulp 100 may be provided to the pulp distribution compartment arrangement 20 from any direction, as indicated by the alternative inlet pipe illustrated by broken lines. The pulp thus enters, as indicated by the arrow 102, the pulp compartment 14 and follows the rotation of the perforated cylinder 10. Gas and liquid (as typically also some minor amounts of pulp) passes the perforations of the perforated cylinder 10, as indicated by the arrows 103. The perforated cylinder is rotated in a rotational direction R, transporting the pulp within the pulp compartment 14 around the perforated cylinder 10.

If the pulp filter equipment 1 is intended for washing purposes, washing liquids 104 can be introduced in washing sections 16 at different positions around the pulp filter equipment 1.

The pulp, typically reduced in liquid content 106, is excited from the pulp filter equipment 1 through an outlet 18. In washing applications, however, the pulp exiting the outlet 18 may even have an increased liquid content compared to the pulp entering the arrangement.

The arrangement and procedures around different kinds of pulp filter equipment 1 are, as such, well-known by anyone skilled in the art and is therefore not further described in detail. Only features and conditions that are of interest for the present ideas are discussed further below.

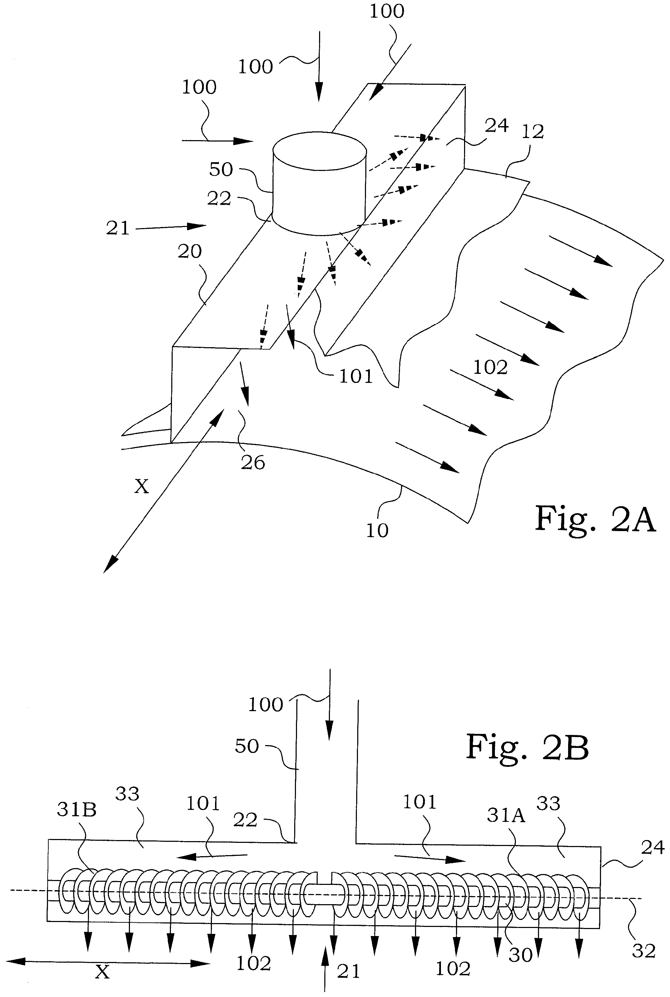

Figure 2A illustrates a part of an embodiment of a pulp filter equipment 1 with a part of a wall of a distribution compartment 24 of a pulp distribution compartment arrangement 20 and a part of the housing 12 removed (as well as the distributer screw). The pulp distribution compartment arrangement 20 thus comprises the distribution compartment 24. The distribution compartment 24 has an exit opening 26, which has an elongated shape with a main extension in a first direction X. This first direction X is parallel with the rotational axis of the perforated cylinder 10.

An inlet pipe 50 is attached to an inlet 22 of the distribution compartment 24, to which inlet pipe 50 incoming pulp 100 may be provided in any direction, as illustrated by the alternative arrows. The inlet 22 is situated at an opposite side of the distribution compartment with respect to the exit opening 26. The inlet 22 is typically considerable narrower than the distribution compartment 24 in the first direction X, and an inlet position 21 of the inlet 22 along the first direction X can be defined. The purpose of the pulp distribution compartment arrangement 20 is, as the name indicates, to distribute the pulp, as indicated by arrows 101, as evenly as possible over the entire width of the perforated cylinder 10.

Figure 2B illustrates the pulp distribution compartment arrangement 20 in a cross-sectional side view. The incoming pulp 100 is distributed 101 in the interior 33 of the distribution compartment 24. For assisting in this distribution, there is provided a distributer screw 30 (which was excluded in Figure 2A), which is rotatably arranged around a rotation axis 32 parallel to the first direction X. In this example, the distributer screw 30 has a first threading 31A, which is arranged for supporting pulp flow in the direction from the inlet position 21 towards one of the ends of the distribution compartment 24, when the distributer screw 30 is rotated in the intended direction. The distributer screw 30 has also a second threading 31B, which is arranged for supporting pulp flow in the direction from the inlet position 21 towards the other end of the distribution compartment 24, when the distributer screw 30 is rotated in the same intended direction. The distributer screw 30 thus assists in forcing the pulp out from the center towards the ends of the distribution compartment 24.

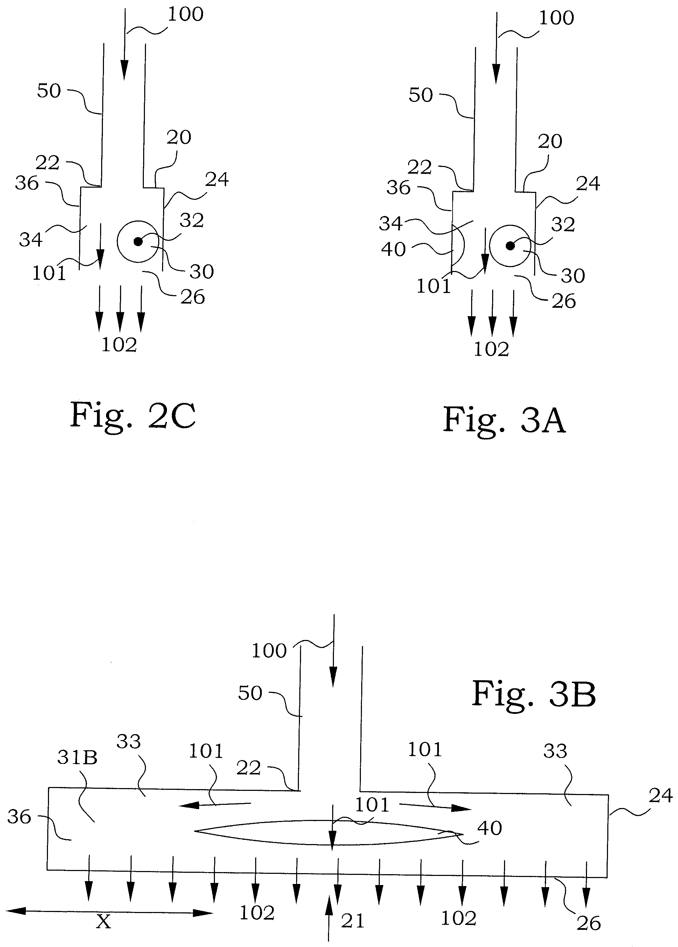

Figure 2C illustrates the same pulp distribution compartment arrangement 20 in a perpendicular cross-sectional side view, seen along the first direction. Here it is seen that the distributer screw 30 is arranged relatively close to one side wall of the distribution compartment 24, thereby leaving an elongated flow passage 34 open at the other side. The elongation of the flow passage 34 is directed along the first direction, i.e. perpendicular to the view in Figure 2C. The flow passage 34 is defined between the distributer screw 30 and a side wall 36 of the distribution compartment 24. The side wall 36 extends in a flow direction between the inlet 22 and the exit opening 26.

The distributer screw 30 of Figure 2C is intended to be rotated in a counterclockwise direction as illustrated, which means that any pulp flow at the right side of the distributer screw 30 is counteracted, but the pulp flow in the flow passage 34 is facilitated.

Having a very slow rotation of the distributer screw 30 will cause the pulp flow to be faster than the rotation speed, which causes friction losses between the distributer screw 30 and the pulp in the flow passage 34. At the same time, the distribution action is also low. By increasing the rotational speed, the distribution action will increase, and the friction will decrease, at least up to the point where the pulp flow in the flow passage 34 has a same speed as the rotational speed of the distributer screw 30. An even higher speed will probably increase the friction again, causing additional energy losses. Depending on the pressure conditions in the distribution compartment and the pulp compartment in the pulp filter equipment 1, and on the pulp condition, such as e.g. concentration, viscosity, temperature etc., there are different optimum speeds for the distributer screw 30. However, control of the speed of the distributer screw 30 is often difficult to perform due to the complexity in the relation between optimum speed and pulp condition. Furthermore, a distributer screw 30 including speed control may be considerably more expensive than a constant speed arrangement.

An alternative approach to assist in pulp distribution within a pulp distribution compartment is illustrated in Figure 3A. This embodiment of a pulp distribution compartment arrangement 20 for pulp filter equipment utilizing cylinder-based dewatering comprises a distribution compartment 24. The exit opening 26 from the distribution compartment 24 has an elongated shape with a main extension in a first direction (perpendicular to the plane of paper in the illustration). The inlet 22 to the distribution compartment 24 is situated at a side of the distribution compartment opposite to the outlet opening 26. The inlet 22 enters the distribution compartment 24 at an inlet position in the first direction. The distributer screw 30 is rotatably arranged in the distribution compartment 24 with a rotation axis 32 parallel to the first direction. An elongated flow passage 34 is thereby defined between the distributer screw 30 and a side wall 36 of the distribution compartment 24. The side wall 36 extends in a flow direction between the inlet 22 and the exit opening 26. The side wall 36 is in this embodiment depicted as a straight side wall, which extends in a vertical direction. A side wall according to the invention can, however, be a curved side wall, which extends in other directions.

This embodiment further comprises a throttle surface 40 provided at the side wall 36 in a position along the first direction corresponding to the inlet position. This position is defined as a position of a most prominent part of the throttle surface, typically a center of the throttle surface and is referred to as the throttle position. The throttle surface 40 provides a restriction of the elongated flow passage 34 at this throttle position in comparison to other positions in the first direction.

In this embodiment, the throttle surface 40 is provided at the side wall 36 at a level of the distributer screw 30 in the flow direction. This may be advantageous, since already the distributer screw 30 provides some flow restrictions, which then can be enhanced by the throttle surface 40. However, in other embodiments, the throttle surface 40 may be provided at other positions along the flow direction, but before the pulp compartment 14 at the perforated cylinder 10 is reached.

In the embodiment of Figure 3A, the distributer screw 30 is provided close to the opposite wall, with respect to the throttle surface 40. However, in other embodiments, the distributer screw 30 may be positioned closer to the throttle surface 40. The pulp flow 101 may the also have a component at the opposite side of the distributer screw 30.

In a particular other embodiment, a respective throttle surface may be provided at both side walls on opposite sides of the distributer screw 30.

Figure 3B illustrates another side view of the embodiment of a pulp distribution compartment arrangement 20 of Figure 3A with the distributer screw removed. Here, it is easily seen that the inlet 22 enters the distribution compartment 24 at an inlet position 21 in the first direction X. A throttle position is preferably positioned at the inlet position 21. The throttle surface 40 restricts the width of the flow passage, which means that the local pressure in this region increases. The flow of pulp 101 within the pulp distribution compartment arrangement 20 typically follows a path striving towards lower pressures, and the tendency for the flow of pulp to go from the inlet position 21 towards the ends of the distribution compartment 24 increases. This results in a more even distribution of the pulp along the entire exit opening 26. The pulp flow 102 into the pulp compartment of an associated pulp filter equipment thus takes place over the entire width.

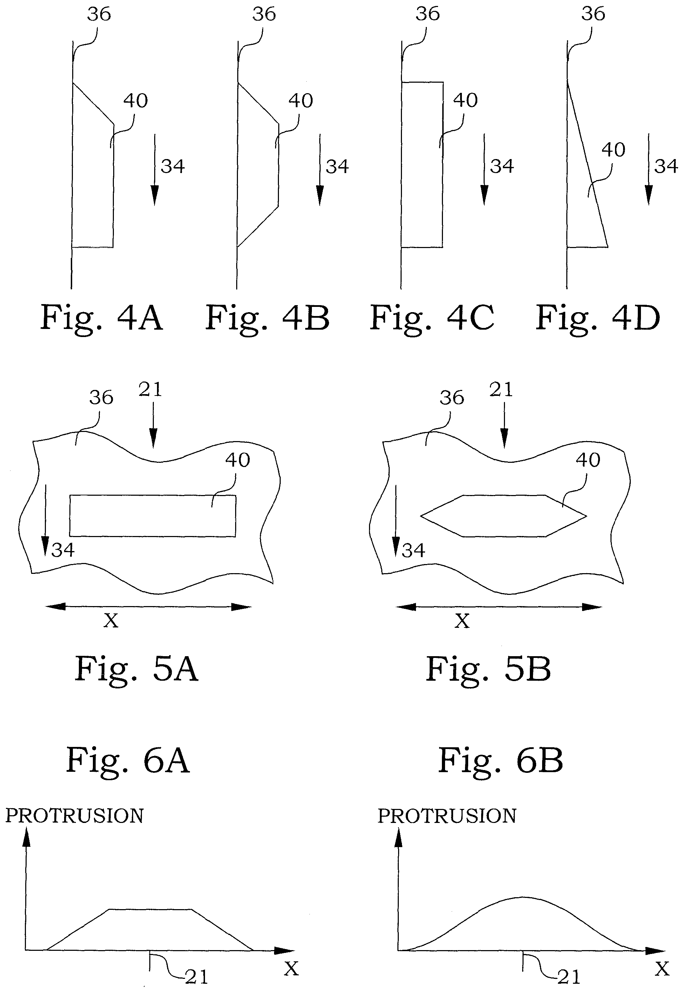

The throttle surface 40 can be designed in many different ways. Figure 4A illustrates a side view of a side wall 36 and a throttle surface 40, where the upstream end of the throttle surface is constituted by an inclined flat surface. The downstream part of the throttle surface 40 is the provided at a constant distance from the side wall 36. In Figure 4B, the throttle surface 40 is provided with an inclined surface both at the upstream and downstream ends. In Figure 4C, a throttle surface with a rectangular cross-section is illustrated. In Figure 4D, the throttle surface 40 consists of a single inclined surface. As any person skilled in the art understands, the shape of the throttle surface 40 can be varied in many different ways.

Similarly, the shape of the throttle surface 40 along the first direction X may also be designed in many different ways. Figure 3B indicates a shape having a broadest with in the vicinity of the inlet position 21 and which gradually narrows towards the ends of the distribution compartment 24. Figure 5A illustrates a throttle surface 40 having a rectangular shape as seen in a direction perpendicular to the first direction X and the inlet pulp flow. Figure 5B illustrates a throttle surface 40 having a reduced vertical extension in the vicinity of the ends. Also here, as any person skilled in the art understands, the shape of the throttle surface 40 can be varied in many different ways.

Also the protrusion from the side wall can be designed in different ways. In a preferred embodiment, the restriction of the elongated flow passage decreases monotonically from the throttle position in at least one direction along the first direction. By "monotonically decreasing" is understood the common mathematical definition, i.e. that the restriction is constant or decreasing in every section from the throttle position outwards. In other words, the restriction of the elongated flow passage is largest at the throttle position and lacks any section with increasing restriction when moving outwards along the first direction from the throttle position.

This monotonic behaviour is preferably maintained over at least 80% of a distance between the throttle position and an end wall of the distribution compartment. Close to an end wall of the distribution compartment, end effects may occur. Such end effects may result in that there is a build-up of pressure within the pulp close to the end wall. In such cases, it may be advantageous to cause pulp to instead move inwards, away from the end wall. Consequently, in such cases, the restriction of the elongated flow passage may even increase close to the end wall. In most applications, such end effects are only present outside the above mentioned 80% of a distance between the throttle position and an end wall of the distribution compartment.

Figure 6A illustrates one such example. Here, in the diagram, the protrusion of the throttle surface 40 is plotted against the position along the first direction. A flat mid-section covers the inlet position 21. At each end, the protrusion is gradually, in this particular case linearly, decreasing. This restriction is thus monotonically decreasing from the inlet position 21 towards the respective ends. In this particular embodiment, the throttle surface is a piecewise flat surface.

Figure 6B illustrates another example of a throttle surface causing a restriction that monotonically decreases from the inlet position 21 towards the respective ends. In this case, the decrease is gradual in a non-linear fashion. As any person skilled in the art understands, the shape of the throttle surface 40 can be varied in many different ways.

Also the amount by which the throttle surface protrudes is of importance. A larger protrusion cases a larger flow restriction and typically increases the tendency to force the pulp flow towards the sides. In order to give a reasonably effect for most design variations, the width of the flow passage 34 is preferably reduced by at least 10%. By using a ratio between on one hand a smallest distance between the throttle surface and the distributer screw and on the other hand the largest distance between the side wall and the distributer screw, one definition of the flow passage reduction can be defined. Preferably, such a ratio is less than 0.9, more preferably less than 0.8, even more preferably less than 0.65 and most preferably less than 0.5. This enables a noticeable influence on the flow characteristics of the pulp within the pulp distribution compartment arrangement.

In a particular embodiment, the distributer screw 30 is arranged in a similar manner as in Figure 2B. In other words, the distributer screw extends outside the inlet position 21 on both sides along the first direction X. In a further embodiment, the distributer screw has a threading in a first direction at one side of the throttle position and a threading in a second, opposite, direction at the opposite side of the throttle position. Preferably, as mentioned above, the restriction decreases monotonically from the throttle position in both directions along the first direction.

The mechanical construction of the throttle surface can be of many different kinds. A solid or hollow volume of solid material can in one be attached to the side wall. Alternatively, the side wall may be re-shaped to give the protrusion. In other words, the throttle surface may be integrated directly into the side wall. The throttle surface may also be formed by arranging e.g. a number of flat or curved plates to the side wall and to each other. Another approach is to form the throttle surface by a sheet supported by a throttle surface support. The sheet may be rigid or elastic

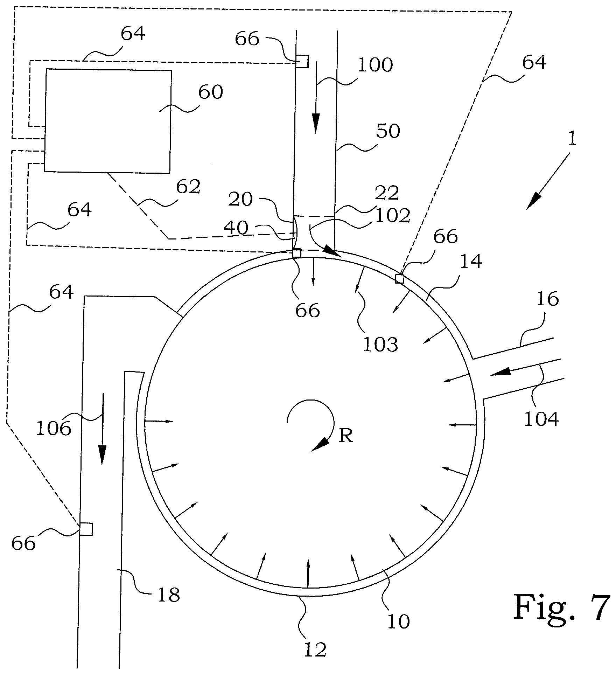

As mentioned in the background, different pulp conditions may require different conditions within the pulp distribution compartment arrangement to achieve a proper pulp distribution. In Figure 7, a pulp filter equipment 1 is illustrated, having a throttle surface 40 according to the ideas presented above. The distributer screw is removed in this illustration to increase the visibility. The pulp dewatering arrangement 2 of the filter equipment 1 may in one embodiment be a pulp press-washing equipment. The pulp dewatering arrangement 2 of the filter equipment 1 may in another embodiment be a pulp press-dewatering equipment.

In one embodiment, the throttle surface is adjustable, thereby enabling provision of different restriction sizes and/or shapes. In embodiments based on a sheet supported by a throttle surface support, the throttle surface support can be adjustable. In a further embodiment, the throttle surface support is adjustable from outside the pulp distribution compartment arrangement 20, thereby enabling provision of different restriction sizes and/or shapes during operation.

In a particular embodiment, the pulp distribution compartment arrangement 20 further comprises a control unit 60. The control unit 60 has an input for information associated with sensor readings. Typically, sensors 66 are connected by wired connections 64 or wireless connections to the input of the control unit 60. The control unit 60 is thereby configured to adjust the throttle surface 40 e.g. by the throttle surface support in dependence of the information associated with sensor readings. This can be achieved by sending signals to an adjustment arrangement of the throttle surface 40, e.g. by wired connections 62 or wireless connections.

The information associated with sensor readings may in one embodiment comprise measurements related to pulp flow. In other words, at least one the sensors 66 may be a sensor responsive to properties associated with pulp flow. Examples of such sensors are e.g. pressure sensors, flow speed sensors, temperature sensors, conductivity sensors etc. The information associated with sensor readings thus typically comprise information concerning pulp properties and/or flow information of a flow of pulp. In other words, at least one the sensors 66 may be a sensor responsive to properties associated with pulp flow .

Seen from a pulp filter equipment 1 view, the pulp distribution compartment arrangement 20 is a pulp distribution compartment arrangement having a control unit 60. The pulp treatment equipment 1 then further comprises at least one sensor, connected to the control unit and arranged for providing the information associated with sensor readings.

As mentioned above, in one embodiment, at least one of the sensors is a sensor responsive to properties associated with pulp flow. Preferably, in one further embodiment, the sensor responsive to properties associated with pulp flow is arranged to measure such conditions within the pulp compartment 14. In another embodiment, the sensor responsive to properties associated with pulp flow is arranged to measure such conditions at the exit opening from the distribution compartment.

In one embodiment, , the sensor responsive to properties associated with pulp flow is arranged to measure pulp properties and/or flow information of a flow of pulp 100 to be entered into the inlet 22.

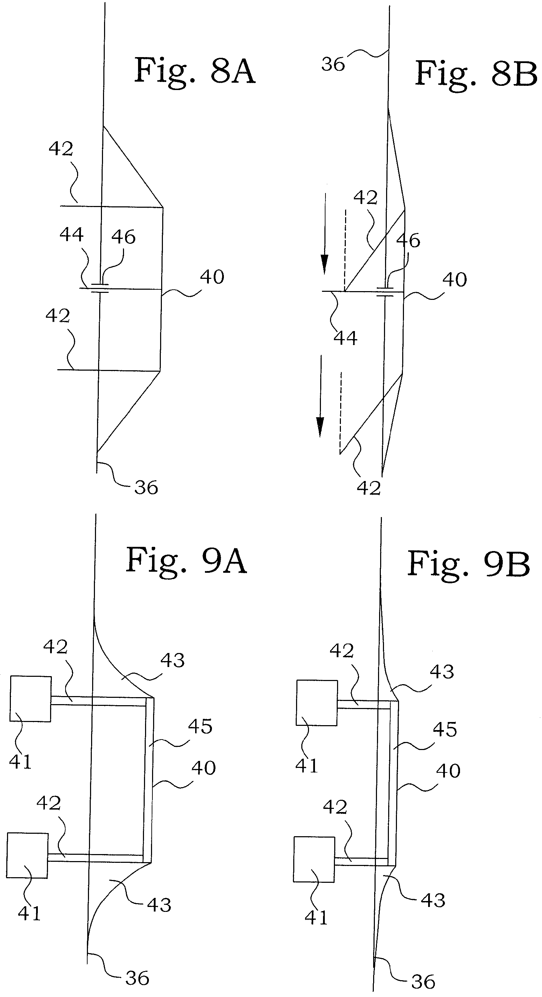

The controllability of the throttle surface 40 can be implemented in many different ways. Figure 8A illustrates schematically one approach to provide a throttle surface 40 with variable protrusion. In this embodiment, the throttle surface 40 comprises three sections of planar plates hinged to each other. The center plate is joined to two throttle surface supports 42 in a hinged manner. A guiding pin 44 attached to the center plate of the throttle surface 40 is provided through a guide opening 46 to ensure the vertical positioning of the throttle surface 40. In Figure 8B, the ends of the throttle surface supports 42 that are not hinged to the throttle surface 40 are moved vertically, thereby causing the enter plate of the throttle surface 40 to be moved closer to the side wall 36. The moving of the throttle surface supports 42 can e.g. be controlled by a control unit, such as illustrated in Figure 7.

Figure 9A illustrates an alternative embodiment. Here, a flexible surface sheet 43 is supported on a rigid plate 45, which in turn is attached to throttle surface supports 42. The throttle surface supports 42 are linearly movable by motor units 41. By moving the throttle surface supports 42 in and out, the protrusion of the flexible surface sheet 43 can be adapted, as illustrated in Figure 9B.

As any person skilled in the art understands, the approach for controlling a shape and/or protrusion of the throttle surface 40 can be varied in many different ways.

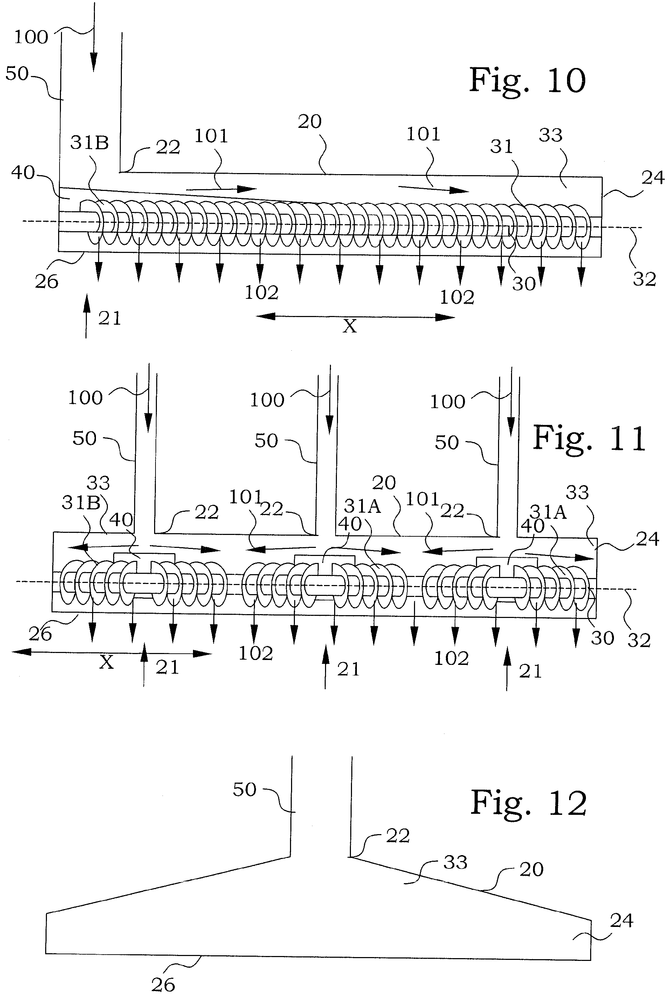

The shape and design of the pulp distribution compartment arrangement may also vary in other aspects. In Figure 10, an embodiment with an asymmetric inlet of pulp is shown. The inlet 22 is here situated at one end of the distribution compartment 24. The distributer screw 30 is in this embodiment only requested to drive the pulp in one direction, to the right as illustrated in the figure. The distributer screw 30 therefore only presents one threading 31. The throttle surface 40 here starts at the left side of the distribution compartment, as illustrated and protrudes at least a part of the distance towards the right side.

Figure 11 illustrates yet another embodiment of a pulp distribution compartment arrangement 20. Here, the pulp distribution compartment arrangement 20 comprises more than one inlet 22 to the distribution compartment 24, in this particular embodiment three. The inlets 22 are positioned at different positions along the first direction X. The pulp distribution compartment arrangement 20 also comprises more than one throttle surface 40, one for each inlet 22. The throttle surfaces 40 are provided at the side wall 36 at a level of the distributer screw 30 in the flow direction and in a respective position 21 along the first direction X corresponding to a respective inlet 22. The distributer screw 30 is provided with threadings 31A and 31B, alternating in threading directions, adapted to assist in distributing pulp away from each inlet 22.

Also, the distribution compartment 24 itself may be of varying design. Figure 12 illustrates schematically the outer shape of a distribution compartment 24. In this embodiment, the distribution compartment 24 presents a sloping upper wall, giving an interior 33 volume that is higher in the vicinity of the inlet 22 compared to the ends. Such shaping may also facilitate the distribution of the pulp.

As indicated above, the pulp distribution compartment arrangement 20 according to the embodiments presented above is advantageously used in a pulp filter equipment 1. The pulp filter equipment 1 comprises a pulp dewatering arrangement 2 having a pulp compartment 14 provided in contact with a perforated cylinder 10. The pulp distribution compartment arrangement 20 is arranged with the exit opening 26 in fluid contact with the pulp compartment 14 and with the main extension X of the exit opening 26 parallel to an axis of the cylinder 10.

The pulp dewatering arrangement 2 is in one embodiment a pulp press-washing equipment. The pulp dewatering arrangement 2 is in another embodiment a pulp press-dewatering equipment.

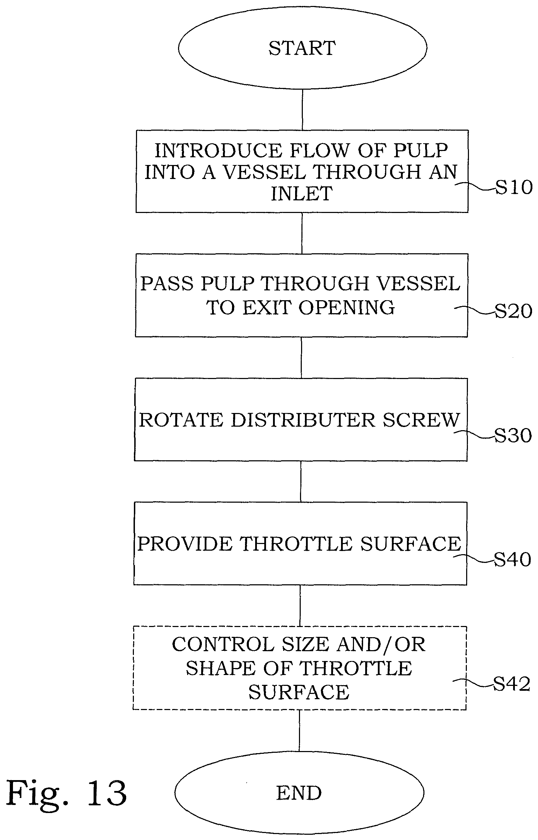

Figure 13 illustrates a flow diagram of steps of an embodiment of a pulp introduction method for pulp filter equipment utilizing cylinder-based dewatering. In step S10, a flow of pulp is introduced into a distribution compartment through an inlet. In step S20, the pulp is passed through the distribution compartment to an exit opening. The exit opening is situated at a side of the distribution compartment opposite to the inlet and has an elongated shape with a main extension in a first direction. The flow of pulp enters the distribution compartment at an inlet position in the first direction. A distributer screw, rotatably arranged in the distribution compartment with a rotation axis parallel to the first direction, is rotated in step S30. Thereby, an elongated flow passage is defined between the distributer screw and a side wall of the distribution compartment. The side wall extends in a flow direction between the inlet and the exit opening. In step S40, a throttle surface is provided at the side wall in a throttle position along the first direction corresponding to the inlet. Thereby, the throttle surface provides a restriction of the elongated flow passage at the throttle position in comparison to other positions in the first direction.

In a preferred embodiment, in step S42, a size and/or shape of the throttle surface is controlled. Preferably, information associated with sensor readings is obtained, whereby the step of controlling a size and/or shape of the throttle surface is performed in dependence of the information associated with sensor readings.

## Claims

1. A pulp distribution compartment arrangement (20) for pulp filter equipment (1) utilizing cylinder-based dewatering, comprising:
- a distribution compartment (24);
- an exit opening (26) from said distribution compartment (24), said exit opening (26) having an elongated shape with a main extension in a first direction (X);
- a inlet (22) to said distribution compartment (24) at a side of the distribution compartment opposite to said exit opening (26), said inlet (22) entering said distribution compartment (24) at an inlet position (21) in said first direction (X);
- a distributer screw (30) rotatably arranged in said distribution compartment (24) with a rotation axis (32) parallel to said first direction (X);
whereby an elongated flow passage (34) is defined between said distributer screw (30) and a side wall (36) of said distribution compartment (24), said side wall (36) extending in a flow direction between said inlet (22) and said exit opening (26),
**characterized by**
- a throttle surface (40) provided at said side wall (36) in a throttle position along said first direction corresponding to said inlet position (21);
whereby said throttle surface (24) provides a restriction of said elongated flow passage (34) at said throttle position in comparison to other positions in said first direction (X).

2. The pulp distribution compartment arrangement according to claim 1, **characterized in that** said restriction decreases monotonically from said throttle position in at least one direction along said first direction (X).

3. The pulp distribution compartment arrangement according to claim 2, **characterized in that** said restriction decreases monotonically from said throttle position in at least one direction along said first direction (X) over at least 80% of a distance between said throttle position and an end wall of said distribution compartment (24).

4. The pulp distribution compartment arrangement according to any of the claims 1 to 3, **characterized in that** said distributer screw (30) extends outside said inlet position (21) on both sides along said first direction (X).

5. The pulp distribution compartment arrangement according to claim 4, **characterized in that** said distributer screw (30) has a threading (31A) in a first direction at one side of said throttle position and a threading (31B) in a second, opposite, direction at the opposite side of said throttle position.

6. The pulp distribution compartment arrangement according to claim 4 or 5, **characterized in that** said restriction decreases monotonically from said throttle position in both directions along said first direction (X).

7. The pulp distribution compartment arrangement according to any of the claims 1 to 6, **characterized in that** a ratio between on one hand a smallest distance between said throttle surface (40) and said distributer screw (30) and on the other hand the largest distance between said side wall (36) and said distributer screw (30) is less than 0.9, preferably less than 0.8, more preferably less than 0.65 and most preferably less than 0.5.

8. The pulp distribution compartment arrangement according to any of the claims 1 to 7, **characterized in that** said throttle surface (40) is provided at said side wall (36) at a level of said distributer screw (30) in said flow direction.

9. The pulp distribution compartment arrangement according to any of the claims 1 to 8, **characterized in that** a respective throttle surface (40) is provided at side walls on both sides of said distributer screw (30).

10. The pulp distribution compartment arrangement according to any of the claims 1 to 9, **characterized in that** said throttle surface (40) is a piecewise flat surface.

11. The pulp distribution compartment arrangement according to any of the claims 1 to 10, **characterized in that** said throttle surface (40) comprises a sheet (43) supported by a throttle surface support (42).

12. The pulp distribution compartment arrangement according to claim 11, **characterized in that** said throttle surface support (42) is adjustable, thereby enabling provision of different restriction sizes and/or shapes.

13. The pulp distribution compartment arrangement according to claim 12, **characterized in that** said throttle surface support (42) is adjustable from outside said pulp distribution compartment arrangement (20), thereby enabling provision of different restriction sizes and/or shapes during operation.

14. The pulp distribution compartment arrangement according to claim 12 or 13, **characterized by** a control unit (60) having an input for information associated with sensor readings, said control unit (60) being configured to adjust said throttle surface support (40) in dependence of said information associated with sensor readings.

15. The pulp distribution compartment arrangement according to claim 14, **characterized in that** said information associated with sensor readings responsive to properties associated with pulp flow.

16. The pulp distribution compartment arrangement according to claim 14 or 15, **characterized in that** said information associated with sensor readings comprises information concerning at least one of a flow speed of pulp, pressure in said pulp, pulp temperature and pulp conductivity.

17. The pulp distribution compartment arrangement according to any of the claims 1 to 16, **characterized by** more than one inlet (22) to said distribution compartment (24), positioned at different positions along the first direction (X), and by more than one throttle surface (40) provided at said side wall (36) at a level of said distributer screw (30) in said flow direction and in a position along said first direction (X) corresponding to a respective said inlet (22).

18. A pulp filter equipment (1), comprising:
- a pulp dewatering arrangement (2) having a pulp compartment (14) provided in contact with a perforated cylinder (10),
**characterized by**
- a pulp distribution compartment arrangement (20) according to any of the claims 1-17;
said pulp distribution compartment arrangement (20) being arranged with said exit opening (26) in fluid contact with said pulp compartment (14) and with said main extension of said exit opening (26) being parallel to an axis of said cylinder (10).

19. The pulp filter equipment according to claim 18, **characterized in that** said pulp distribution compartment arrangement (20) is a pulp distribution compartment arrangement according to claim 14, whereby said pulp filter equipment (1) further comprises at least one sensor (66), connected to said control unit (60) and providing said information associated with sensor readings.

20. The pulp filter equipment according to claim 19, **characterized in that** said pulp distribution compartment arrangement (20) is a pulp distribution compartment arrangement according to claim 15, whereby at least one of said at least one sensor (66) is a sensor responsive to properties associated with pulp flow.

21. The pulp filter equipment according to claim 20, **characterized in that** said pressure sensor is arranged to measure pulp conditions within said pulp compartment (14).

22. The pulp filter equipment according to any of the claims 19 to 21, **characterized in that** said pulp distribution compartment arrangement (20) is a pulp distribution compartment arrangement according to claim 16, whereby at least one of said at least one sensor (66) is a sensor measuring at least one of a flow speed of pulp, pressure in said pulp, pulp temperature and pulp conductivity.

23. The pulp filter equipment according to claim 22, **characterized in that** said pulp condition sensor is arranged to measure pulp properties and/or flow information of a flow of pulp to be entered into said inlet (22).

24. The pulp filter equipment according to any of the claims 18 to 23, **characterized in that** said pulp dewatering arrangement (2) is a pulp press-washing equipment.

25. The pulp filter equipment according to any of the claims 18 to 23, **characterized in that** said pulp dewatering arrangement (2) is a pulp press-dewatering equipment.

26. A pulp introduction method for pulp filter equipment (1) utilizing cylinder-based dewatering, comprising the steps of:
- introducing (S10) a flow of pulp (101) into a distribution compartment (24) through an inlet (22);
- passing (S20) said pulp through said distribution compartment (24) to an exit opening (26), said exit opening (26) being situated at a side of the distribution compartment (24) opposite to said inlet (22) and having an elongated shape with a main extension in a first direction (X);
said flow of pulp (101) entering said distribution compartment (24) at an inlet position (21) in said first direction (X);
- rotating (S30) a distributer screw (30) rotatably arranged in said distribution compartment (24) with a rotation axis (32) parallel to said first direction (X);
whereby an elongated flow passage (34) is defined between said distributer screw (30) and a side wall (36) of said distribution compartment (24), said side wall (36) extending in a flow direction between said inlet (22) and said exit opening (26),
**characterized by**
- providing (S40) a throttle surface (40) at said side wall (36) in a throttle position along said first direction (X) corresponding to said inlet (22);
whereby said throttle surface (40) provides a restriction of said elongated flow passage (34) at said throttle position in comparison to other positions in said first direction.

27. The pulp introduction method according to claim 26, **characterized by** the further step of controlling (S42) a size and/or shape of said throttle surface (40).

28. The pulp introduction method according to claim 26, **characterized by** obtaining information associated with sensor readings, whereby said step of controlling (S42) a size and/or shape of said throttle surface (40) is performed in dependence of said information associated with sensor readings.

## Patentansprüche

1. Zellstoffverteilungsfachanordnung (20) für eine Zellstofffilteranlage (1), die eine zylinderbasierte Entwässerung verwendet, umfassend:
- ein Verteilungsfach (24);
- eine Ausgangsöffnung (26) aus dem Verteilungsfach (24), wobei die Ausgangsöffnung (26) eine längliche Form mit einer Haupterstreckung in einer ersten Richtung (X) aufweist;
- einen Einlass (22) zu dem Verteilungsfach (24) an einer Seite des Verteilungsfachs gegenüber der Ausgangsöffnung (26), wobei der Einlass (22) in das Verteilungsfach (24) an einer Einlassposition (21) in der ersten Richtung (X) eintritt;
- eine Verteilerschnecke (30), die in dem Verteilungsfach (24) drehbar angeordnet ist, mit einer Drehachse (32), die parallel zu der ersten Richtung (X) ist;
wobei ein länglicher Strömungsdurchgang (34) zwischen der Verteilerschnecke (30) und einer Seitenwand (36) des Verteilungsfachs (24) definiert ist, wobei sich die Seitenwand (36) in einer Strömungsrichtung zwischen dem Einlass (22) und der Ausgangsöffnung (26) erstreckt, **gekennzeichnet durch**
- eine Drosseloberfläche (40), die an der Seitenwand (36) in einer Drosselposition entlang der ersten Richtung bereitgestellt ist, die der Einlassposition (21) entspricht;
wodurch die Drosseloberfläche (40) eine Einschränkung des länglichen Strömungsdurchgangs (34) an der Drosselposition im Vergleich zu anderen Positionen in der ersten Richtung (X) bereitstellt.

2. Zellstoffverteilungsfachanordnung nach Anspruch 1,
**dadurch gekennzeichnet, dass** die Einschränkung von der Drosselposition in mindestens einer Richtung entlang der ersten Richtung (X) monoton abnimmt.

3. Zellstoffverteilungsfachanordnung nach Anspruch 2,
**dadurch gekennzeichnet, dass** die Einschränkung von der Drosselposition in mindestens einer Richtung entlang der ersten Richtung (X) über mindestens 80 % eines Abstands zwischen der Drosselposition und einer Endwand des Verteilungsfachs (24) monoton abnimmt.

4. Zellstoffverteilungsfachanordnung nach einem der Ansprüche 1 bis 3, **dadurch gekennzeichnet, dass** sich die Verteilerschnecke (30) außerhalb der Einlassposition (21) auf beiden Seiten entlang der ersten Richtung (X) erstreckt.

5. Zellstoffverteilungsfachanordnung nach Anspruch 4,
**dadurch gekennzeichnet, dass** die Verteilerschraube (30) ein Gewinde (31A) in einer ersten Richtung auf einer Seite der Drosselposition und ein Gewinde (31B) in einer zweiten, entgegengesetzten Richtung auf der gegenüberliegenden Seite der Drosselposition aufweist.

6. Zellstoffverteilungsfachanordnung nach Anspruch 4 oder 5,
**dadurch gekennzeichnet, dass** die Einschränkung von der Drosselposition in beide Richtungen entlang der ersten Richtung (X) monoton abnimmt.

7. Zellstoffverteilungsfachanordnung nach einem der Ansprüche 1 bis 6, **dadurch gekennzeichnet, dass** ein Verhältnis zwischen einem kleinsten Abstand zwischen der Drosseloberfläche (40) und der Verteilerschnecke (30) einerseits und dem größten Abstand zwischen der Seitenwand (36) und der Verteilerschnecke (30) andererseits kleiner als 0,9, vorzugsweise kleiner als 0,8, mehr bevorzugt kleiner als 0,65 und am meisten bevorzugt kleiner als 0,5 ist.

8. Zellstoffverteilungsfachanordnung nach einem der Ansprüche 1 bis 7, **dadurch gekennzeichnet, dass** die Drosseloberfläche (40) an der Seitenwand (36) auf einer Höhe der Verteilerschnecke (30) in der Strömungsrichtung bereitgestellt ist.

9. Zellstoffverteilungsfachanordnung nach einem der Ansprüche 1 bis 8, **dadurch gekennzeichnet, dass** eine Drosseloberfläche (40) an Seitenwänden auf beiden Seiten der Verteilerschnecke (30) bereitgestellt ist.

10. Zellstoffverteilungsfachanordnung nach einem der Ansprüche 1 bis 9, **dadurch gekennzeichnet, dass** die Drosseloberfläche (40) eine stückweise ebene Oberfläche ist.

11. Zellstoffverteilungsfachanordnung nach einem der Ansprüche 1 bis 10, **dadurch gekennzeichnet, dass** die Drosseloberfläche (40) eine Platte (43) umfasst, die durch einen Drosseloberflächenträger (42) getragen wird.

12. Zellstoffverteilungsfachanordnung nach Anspruch 11,
**dadurch gekennzeichnet, dass** der Drosseloberflächenträger (42) verstellbar ist, wodurch eine Bereitstellung unterschiedlicher Einschränkungsgrößen und/oder -formen ermöglicht wird.

13. Zellstoffverteilungsfachanordnung nach Anspruch 12,
**dadurch gekennzeichnet, dass** der Drosseloberflächenträger (42) von außerhalb der Zellstoffverteilungsfachanordnung (20) verstellbar ist, wodurch während eines Betriebs die Bereitstellung unterschiedlicher Einschränkungsgrößen und/oder -formen ermöglicht wird.

14. Zellstoffverteilungsfachanordnung nach Anspruch 12 oder 13, **gekennzeichnet durch** eine Steuereinheit (60), die einen Eingang für Informationen aufweist, die mit Sensormesswerten verknüpft sind, wobei die Steuereinheit (60) konfiguriert ist, um den Drosseloberflächenträger (40) in Abhängigkeit von den Informationen zu verstellen, die mit den Sensormesswerten verknüpft sind.

15. Zellstoffverteilungsfachanordnung nach Anspruch 14,
**dadurch gekennzeichnet, dass** die Informationen, die mit Sensormesswerten verknüpft sind, auf Eigenschaften reagieren, die mit der Zellstoffströmung verknüpft sind.

16. Zellstoffverteilungsfachanordnung nach Anspruch 14 oder 15,
**dadurch gekennzeichnet, dass** die Informationen, die mit Sensormesswerten verknüpft sind, Informationen umfassen, die mindestens eines von einer Strömungsgeschwindigkeit von Zellstoff, einem Druck in dem Zellstoff, einer Zellstofftemperatur und einer Zellstoffleitfähigkeit betreffen.

17. Zellstoffverteilungsfachanordnung nach einem der Ansprüche 1 bis 16, **gekennzeichnet durch** mehr als einen Einlass (22) zu dem Verteilungsfach (24), der an unterschiedlichen Positionen entlang der ersten Richtung (X) positioniert ist, und durch mehr als eine Drosseloberfläche (40), die an der Seitenwand (36) auf einer Höhe der Verteilerschnecke (30) in der Strömungsrichtung und an einer Position entlang der ersten Richtung (X) bereitgestellt ist, die einem jeweiligen Einlass (22) entspricht.

18. Zellstofffilteranlage (1), umfassend:
- eine Zellstoffentwässerungsanordnung (2), die ein Zellstofffach (14) aufweist, das in Kontakt mit einem perforierten Zylinder (10) bereitgestellt ist, **gekennzeichnet durch**
- eine Zellstoffverteilungsfachanordnung (20) nach einem der Ansprüche 1 bis 17;
wobei die Zellstoffverteilungsfachanordnung (20) mit der Ausgangsöffnung (26) in Fluidkontakt mit dem Zellstofffach (14) und mit der Haupterstreckung der Ausgangsöffnung (26) parallel zu einer Achse des Zylinders (10) angeordnet ist.

19. Zellstofffilteranlage nach Anspruch 18, **dadurch gekennzeichnet, dass** die Zellstoffverteilungsfachanordnung (20) eine Zellstoffverteilungsfachanordnung nach Anspruch 14 ist, wobei die Zellstofffilteranlage (1) ferner mindestens einen Sensor (66) umfasst, der mit der Steuereinheit (60) verbunden ist und die Informationen bereitstellt, die mit den Sensormesswerten verknüpft sind.

20. Zellstofffilteranlage nach Anspruch 19, **dadurch gekennzeichnet, dass** die Zellstoffverteilungsfachanordnung (20) eine Zellstoffverteilungsfachanordnung nach Anspruch 15 ist, wobei mindestens einer des mindestens einen Sensors (66) ein Sensor ist, der auf Eigenschaften reagiert, die mit der Zellstoffströmung verknüpft sind.

21. Zellstofffilteranlage nach Anspruch 20, **dadurch gekennzeichnet, dass** der Drucksensor angeordnet ist, um Zellstoffbedingungen innerhalb des Zellstofffachs (14) zu messen.

22. Zellstofffilteranlage nach einem der Ansprüche 19 bis 21,
**dadurch gekennzeichnet, dass** die Zellstoffverteilungsfachanordnung (20) eine Zellstoffverteilungsfachanordnung nach Anspruch 16 ist, wobei mindestens einer des mindestens einen Sensors (66) ein Sensor ist, der mindestens eines von einer Strömungsgeschwindigkeit von Zellstoff, einem Druck in dem Zellstoff, einer Zellstofftemperatur und einer Zellstoffleitfähigkeit misst.

23. Zellstofffilteranlage nach Anspruch 22, **dadurch gekennzeichnet, dass** der Zellstoffbedingungssensor angeordnet ist, um Zellstoffeigenschaften und/oder Strömungsinformationen einer Zellstoffströmung zu messen, die in den Einlass (22) eintreten soll.

24. Zellstofffilteranlage nach einem der Ansprüche 18 bis 23,
**dadurch gekennzeichnet, dass** die Zellstoffentwässerungsanordnung (2) eine Zellstoffpresswaschanlage ist.

25. Zellstofffilteranlage nach einem der Ansprüche 18 bis 23,
**dadurch gekennzeichnet, dass** die Zellstoffentwässerungsanordnung (2) eine Zellstoffpressentwässerungsanlage ist.

26. Verfahren zum Einführen von Zellstoff in eine Zellstofffilteranlage (1), die eine zylinderbasierte Entwässerung verwendet, umfassend die folgenden Schritte:
- Einführen (S10) einer Zellstoffströmung (101) in ein Verteilungsfach (24) durch einen Einlass (22);
- Leiten (S20) des Zellstoffes durch das Verteilungsfach (24) zu einer Ausgangsöffnung (26), wobei sich die Ausgangsöffnung (26) auf einer Seite des Verteilungsfachs (24) gegenüber dem Einlass (22) befindet und eine längliche Form mit einer Haupterstreckung in einer ersten Richtung (X) aufweist;
wobei die Zellstoffströmung (101) an einer Einlassposition (21) in der ersten Richtung (X) in das Verteilungsfach (24) eintritt;
- Drehen (S30) einer Verteilerschnecke (30), die in dem Verteilungsfach (24) mit einer Drehachse (32) parallel zu der ersten Richtung (X) drehbar angeordnet ist;
wobei ein länglicher Strömungsdurchgang (34) zwischen der Verteilerschnecke (30) und einer Seitenwand (36) des Verteilungsfachs (24) definiert ist, wobei sich die Seitenwand (36) in einer Strömungsrichtung zwischen dem Einlass (22) und der Ausgangsöffnung (26) erstreckt,
**gekennzeichnet durch**
- Bereitstellen (S40) einer Drosseloberfläche (40) an der Seitenwand (36) in einer Drosselposition entlang der ersten Richtung (X), die dem Einlass (22) entspricht;
wodurch die Drosseloberfläche (40) eine Einschränkung des länglichen Strömungsdurchgangs (34) an der Drosselposition im Vergleich zu anderen Positionen in der ersten Richtung bereitstellt.

27. Verfahren zum Einführen von Zellstoff nach Anspruch 26, **gekennzeichnet durch** den weiteren Schritt zum Steuern (S42) einer Größe und/oder Form der Drosseloberfläche (40).

28. Verfahren zum Einführen von Zellstoff nach Anspruch 26, **gekennzeichnet durch** ein Erhalten von Informationen, die mit Sensormesswerten verknüpft sind, wobei der Schritt zum Steuern (S42) einer Größe und/oder Form der Drosseloberfläche (40) in Abhängigkeit von den Informationen durchgeführt wird, die mit Sensormesswerten verknüpft sind.

## Revendications

1. Dispositif de compartiment de distribution de pâte (20) pour un équipement de filtrage de pâte (1) utilisant une déshydratation à base de cylindres, comprenant :
- un compartiment de distribution (24) ;
- une ouverture de sortie (26) dudit compartiment de distribution (24), ladite ouverture de sortie (26) ayant une forme allongée avec une extension principale dans une première direction (X) ;
- une entrée (22) dans ledit compartiment de distribution (24) sur un côté du compartiment de distribution opposé à ladite ouverture de sortie (26), ladite entrée (22) pénétrant dans ledit compartiment de distribution (24) à une position d'entrée (21) dans ladite première direction (X) ;
- une vis de distribution (30) disposée de manière rotative dans ledit compartiment de distribution (24) avec un axe de rotation (32) parallèle à ladite première direction (X) ;
selon lequel un passage d'écoulement allongé (34) est défini entre ladite vis de distribution (30) et une paroi latérale (36) dudit compartiment de distribution (24), ladite paroi latérale (36) s'étendant dans une direction d'écoulement entre ladite entrée (22) et ladite ouverture de sortie (26), **caractérisé par**
- une surface d'étranglement (40) prévue sur ladite paroi latérale (36) dans une position d'étranglement le long de ladite première direction correspondant à ladite position d'entrée (21) ;
selon lequel ladite surface d'étranglement (40) permet de restreindre ledit passage d'écoulement allongé (34) dans ladite position d'étranglement par rapport à d'autres positions dans ladite première direction (X).

2. Dispositif de compartiment de distribution de pâte selon la revendication 1, **caractérisé en ce que** ladite restriction diminue de façon monotone à partir de ladite position d'étranglement dans au moins une direction le long de ladite première direction (X).

3. Dispositif de compartiment de distribution de pâte selon la revendication 2, **caractérisé en ce que** ladite restriction diminue de façon monotone à partir de ladite position d'étranglement dans au moins une direction le long de ladite première direction (X) sur
au moins 80 % d'une distance entre ladite position d'étranglement et une paroi d'extrémité dudit compartiment de distribution (24).

4. Dispositif de compartiment de distribution de pâte selon l'une quelconque des revendications 1 à 3, **caractérisé en ce que** ladite vis de distribution (30) s'étend à l'extérieur de ladite position d'entrée (21) des deux côtés le long de ladite première direction (X).

5. Dispositif de compartiment de distribution de pâte selon la revendication 4, **caractérisé en ce que** ladite vis de distribution (30) a un filetage (31A) dans une première direction d'un côté de ladite position d'étranglement et un filetage (31B) dans une seconde direction opposée du côté opposé de ladite position d'étranglement.

6. Dispositif de compartiment de distribution de pâte selon la revendication 4 ou 5, **caractérisé en ce que** ladite restriction diminue de façon monotone à partir de ladite position d'étranglement dans les deux directions le long de ladite première direction (X).

7. Dispositif de compartiment de distribution de pâte selon l'une quelconque des revendications 1 à 6, **caractérisé en ce qu'**un rapport entre, d'une part, une plus petite distance entre ladite surface d'étranglement (40) et ladite vis de distribution (30) et, d'autre part, la plus grande distance entre ladite paroi latérale (36) et ladite vis de distribution (30) est inférieur à 0,9, de préférence inférieur à 0,8, plus préférablement encore inférieur à 0,65 et le plus préférablement encore inférieur à 0,5.

8. Dispositif de compartiment de distribution de pâte selon l'une quelconque des revendications 1 à 7, **caractérisé en ce que** ladite surface d'étranglement (40) est prévue au niveau de ladite paroi latérale (36) au niveau de ladite vis de distribution (30) dans ladite direction d'écoulement.

9. Dispositif de compartiment de distribution de pâte selon l'une quelconque des revendications 1 à 8, **caractérisé en ce qu'**une surface d'étranglement (40) respective est prévue sur les parois latérales des deux côtés de ladite vis de distribution (30).

10. Dispositif de compartiment de distribution de pâte selon l'une quelconque des revendications 1 à 9, **caractérisé en ce que** ladite surface d'étranglement (40) est une surface plane par morceaux.

11. Dispositif de compartiment de distribution de pâte selon l'une quelconque des revendications 1 à 10, **caractérisé en ce que** ladite surface d'étranglement (40) comprend une feuille (43) soutenue par un support de surface d'étranglement (42).

12. Dispositif de compartiment de distribution de pâte selon la revendication 11, **caractérisé en ce que** le support de surface d'étranglement (42) est réglable, ce qui permet d'obtenir des restrictions de tailles et/ou de formes différentes.

13. Dispositif de compartiment de distribution de pâte selon la revendication 12, **caractérisé en ce que** ledit support de surface d'étranglement (42) est réglable de l'extérieur du dispositif de compartiment de distribution de pâte (20), ce qui permet de fournir différentes tailles et/ou formes de restriction pendant le fonctionnement.

14. Dispositif de compartiment de distribution de pâte selon la revendication 12 ou 13, **caractérisé par** une unité de commande (60) ayant une entrée pour les informations associées aux lectures de capteur, ladite unité de commande (60) étant configurée pour ajuster ledit support de surface d'étranglement (40) en fonction desdites informations associées aux lectures de capteur.

15. Dispositif de compartiment de distribution de pâte selon la revendication 14, **caractérisé en ce que** lesdites informations associées aux lectures de capteur répondent aux propriétés associées à l'écoulement de pâte.

16. Dispositif de compartiment de distribution de pâte selon la revendication 14 ou 15, **caractérisé en ce que** lesdites informations associées aux lectures de capteur comprennent des informations concernant au moins l'une parmi une vitesse d'écoulement de pâte, une pression dans ladite pâte, une température de pâte et une conductivité de pâte.

17. Dispositif de compartiment de distribution de pâte selon l'une quelconque des revendications 1 à 16, **caractérisé par** plus d'une entrée (22) dans ledit compartiment de distribution (24), positionnée à différentes positions le long de la première direction (X), et par plus d'une surface d'étranglement (40) prévue sur ladite paroi latérale (36) au niveau de ladite vis de distribution (30) dans ladite direction d'écoulement et dans une position le long de ladite première direction (X) correspondant à une dite entrée (22) respective.

18. Équipement de filtrage de pâte (1), comprenant :
- un dispositif de déshydratation de pâte (2) ayant un compartiment de pâte (14) prévu en contact avec un cylindre perforé (10), **caractérisé par**
- un dispositif de compartiment de distribution de pâte (20) selon l'une quelconque des revendications 1 à 17 ;
ledit dispositif de compartiment de distribution de pâte (20) étant disposé avec ladite ouverture de sortie (26) en contact fluide avec ledit compartiment de pâte (14) et avec ladite extension principale de ladite ouverture de sortie (26) étant parallèle à un axe dudit cylindre (10).

19. Équipement de filtrage de pâte selon la revendication 18,
**caractérisé en ce que** ledit dispositif de compartiment de distribution de pâte (20) est un dispositif de compartiment de distribution de pâte selon la revendication 14, selon lequel ledit équipement de filtrage de pâte (1) comprend en outre au moins un capteur (66), relié à ladite unité de commande (60) et fournissant lesdites informations associées aux lectures de capteur.

20. Équipement de filtrage de pâte selon la revendication 19,
**caractérisé en ce que** ledit dispositif de compartiment de distribution de pâte (20) est un dispositif de compartiment de distribution de pâte selon la revendication 15, selon lequel au moins un capteur (66) est un capteur réagissant aux propriétés associées à l'écoulement de pâte.

21. Équipement de filtrage de pâte selon la revendication 20,
**caractérisé en ce que** ledit capteur de pression est conçu pour mesurer les conditions de pâte à l'intérieur dudit compartiment de pâte (14).

22. Équipement de filtrage de pâte selon l'une quelconque des revendications 19 à 21, **caractérisé en ce que** ledit dispositif de compartiment de distribution de pâte (20) est un dispositif de compartiment de distribution de pâte selon la revendication 16, selon lequel au moins un dudit au moins un capteur (66) est un capteur mesurant au moins l'une parmi une vitesse d'écoulement de pâte, une pression dans ladite pâte, une température de pâte et une conductivité de pâte.

23. Équipement de filtrage de pâte selon la revendication 22,
**caractérisé en ce que** ledit capteur d'état de pâte est conçu pour mesurer les propriétés de pâte et/ou les informations d'écoulement d'un flux de pâte devant être introduit dans ladite entrée (22).

24. Équipement de filtrage de pâte selon l'une quelconque des revendications 18 à 23, **caractérisé en ce que** ledit dispositif de déshydratation de pâte (2) est un équipement de lavage par pressage de pâte.

25. Équipement de filtrage de pâte selon l'une quelconque des revendications 18 à 23, **caractérisé en ce que** ledit dispositif de déshydratation de pâte (2) est un équipement de déshydratation par pressage de pâte.

26. Procédé d'introduction de pâte pour un équipement de filtrage de pâte (1) utilisant une déshydratation à base de cylindres, comprenant les étapes consistant à :
- introduire (S10) un flux de pâte (101) dans un compartiment de distribution (24) par une entrée (22) ;
- faire passer (S20) ladite pâte à travers ledit compartiment de distribution (24) vers une ouverture de sortie (26), ladite ouverture de sortie (26) étant située sur un côté du compartiment de distribution (24) opposé à ladite entrée (22) et ayant une forme allongée avec une extension principale dans une première direction (X) ;
ledit flux de pâte (101) entre dans ledit compartiment de distribution (24) à une position d'entrée (21) dans ladite première direction (X) ;
- faire tourner (S30) une vis de distribution (30) disposée de manière rotative dans ledit compartiment de distribution (24) avec un axe de rotation (32) parallèle à ladite première direction (X) ;
selon lequel un passage d'écoulement allongé (34) est défini entre ladite vis de distribution (30) et une paroi latérale (36) dudit compartiment de distribution (24), ladite paroi latérale (36) s'étendant dans une direction d'écoulement entre ladite entrée (22) et ladite ouverture de sortie (26),
**caractérisé par**
- la fourniture (S40) d'une surface d'étranglement (40) sur ladite paroi latérale (36) dans une position d'étranglement le long de ladite première direction (X) correspondant à ladite entrée (22) ;
selon lequel ladite surface d'étranglement (40) permet de restreindre le passage allongé (34) dans ladite position d'étranglement par rapport à d'autres positions dans la première direction.

27. Procédé d'introduction de pâte selon la revendication 26, **caractérisé par** l'étape supplémentaire consistant à commander (S42) une taille et/ou une forme de ladite surface d'étranglement (40).

28. Procédé d'introduction de pâte selon la revendication 26, **caractérisé par** l'obtention d'informations associées à des lectures de capteur, selon lequel ladite étape de commande (S42) d'une taille et/ou d'une forme de ladite surface d'étranglement (40) est effectuée en fonction desdites informations associées aux lectures de capteur.
